# EUROPEAN PATENT SPECIFICATION

(11) **EP 1 609 251 B1**
(45) Date of publication and mention of the grant of the patent: **18.08.2010**
(21) Application number: 04709068.3
(22) Date of filing: 06.02.2004
(51) Int. Cl.: H04B 5/00, B64D 11/00

(54) **MULTI-RECEIVER COMMUNICATION SYSTEM WITH DISTRIBUTED APERTURE ANTENNA**
MEHR-EMPFÄNGER-KOMMUNIKATIONSSYSTEM MIT VERTEILTER APERTURANTENNE
SYSTEME DE COMMUNICATION A RECEPTEURS MULTIPLES DOTE D'UNE ANTENNE A OUVERTURES REPARTIES

(30) Priority: 06.02.2003 US 360941
(43) Date of publication of application: 28.12.2005
(73) Proprietor: Hamilton Sundstrand Corporation, Rockford, IL 61125-7002 (US)
(72) Inventor: PRISTAS, James, Barrington, IL 60010 (US); HUGHES, Dan, Suffield, CT 06078 (US)
(74) Representative: Leckey, David Herbert
(86) International application number: PCT/US2004/003509
(87) International publication number: WO 2004/073199

(56) References cited:
- EP-A- 0 277 014
- EP-A- 0 630 070
- GB-A- 2 235 336
- US-A- 4 325 039
- US-A- 5 189 432

## Description

### TECHNICAL FIELD

The invention relates to a multi-passenger conveyance having a wireless network installed therein.

### BACKGROUND OF THE INVENTION

With the increase in wireless communication methods as well as business travel, there has been a growing demand for systems and services that can connect travelers to their desired data, such as e-mail and Internet web sites, while they are aboard an aircraft, train, or other multi-passenger conveyance. For simplicity, the description below will focus on wireless networks in an aircraft cabin environment, but the invention can apply to any environment where multiple users may access the network at the same time in an enclosed environment, including buildings, vans, buses, and other similar locations. Further, although the description below focuses on providing wireless links to carry data for aircraft functions, such as health and prognostics, security, in-flight entertainment and cabin control functions, the invention can be used to carry signals applicable to the environment in which the invention is used.

Any wireless communication system within an aircraft cabin ideally should have sufficient electric field strength to provide coupling between a source antenna and a receiver, regardless of the receiver's location in the cabin, while preventing interaction with other aircraft and/or other airport systems. Although a single source antenna with either a directional or omnidirectional radiation pattern may be used to create the requisite field for coupling with the receiving antenna, the electric field strength of the antenna must be strong enough so that wave propagation from the source antenna will still couple a receiver located within the cabin far from the source antenna. However, using a single source antenna creates an uneven field distribution, such as a concentrated field close to the source antenna and a weakened field farther away from the source antenna. Increasing the field strength at the edges of the source antenna's field may improve receiver coupling throughout the cabin, but this creates more opportunities for field leakage outside of the cabin and increases the likelihood of interference with nearby aircraft and/or airport systems.

Further, receivers operating in areas far from the source antenna may experience reductions in the effective bandwidth of the communication system due to multi-path effects at the receivers caused by uneven propagation mode generation. Additionally, longer signal paths, particularly in an enclosed space housing multiple users, increases the likelihood that signals will bounce off the walls of the enclosed space and repeatedly reflect inside the space, creating further interference. Although it may be possible to incorporate additional antennas in the aircraft to reduce the effects of uneven field distribution and mode generation, the fields created by multiple antennas still are not evenly distributed and still create undesirable concentrations of the electric field close to the antenna. Multiple antennas can also be costly and complex to install, making them too impractical for widespread use.

There is a desire for an antenna structure that generates a uniformly distributed electric field.

There is also a desire for a wireless communication system and method that can couple a source antenna with one or more receivers while minimizing multi-path effects of propagation-induced modes in the system, regardless of the receiver's location with respect to the source antenna.

EP-A-277014 discloses multi-passenger conveyance having a wireless communication having an antenna which comprises a leaky coaxial cable. The periphery of the cable is spirally indented so as to leak a large amount of signal. US-A-4325039 discloses a leaky coaxial cable in which apertures are provided in an outer conductor. GB-A-2235336 discloses a leaky cable antenna in which a leaky feeder cable is disposed within a housing that provides a discontinuous RF shield.

### SUMMARY OF THE INVENTION

The invention is directed to a multi-passenger conveyance having an inventive antenna structure having distributed apertures. According to the invention there is provided a multi-passenger wireless communication system as claimed in claim 1.

In one embodiment, the parallel plate waveguide has apertures distributed along the length of the shield covening the waveguide.

The apertures allow radiated energy to leak from the waveguide antenna and form low-power, localized electric fields that can couple receivers to the antenna.

Generating multiple localized electric fields rather than a single, high-power electric field reduces the distance between the antenna and the receiver, thereby reducing propagation modes and multi-path effects that normally occur over longer distances.

The multiple electric fields also ensure that field strength is distributed evenly throughout the communication system.

Further, because the inventive distributed aperture antenna generates a plurality of low-power electric fields rather than a single, high-power electric field, the overall power requirements for the antenna are lowered, reducing the likelihood that the electric field will leak beyond the desired boundaries of the electric fields and interfere with other communication systems.

As a result, the inventive distributed aperture antenna enhances wireless data transmission capability within an aircraft cabin, room, vehicle, or any other space where multiple users may be accessing the communication system in an enclosed space.

### BRIEF DESCRIPTION OF THE DRAWINGS

Figure 1 is a representative diagram of distributed aperture antenna for use according to one embodiment of the invention;
Figure 2 is a representative diagram of a distributed aperture antenna for use according to one embodiment of the invention;
Figure 3 is a representative diagram of an aircraft incorporating the inventive distributed aperture antenna;
Figure 4 is a representative diagram of an electric field distribution in the aircraft of Figure 3;
Figure 5 is a representative diagram of a system incorporating the inventive distributed aperture antenna.

### DETAILED DESCRIPTION OF THE EMBODIMENTS

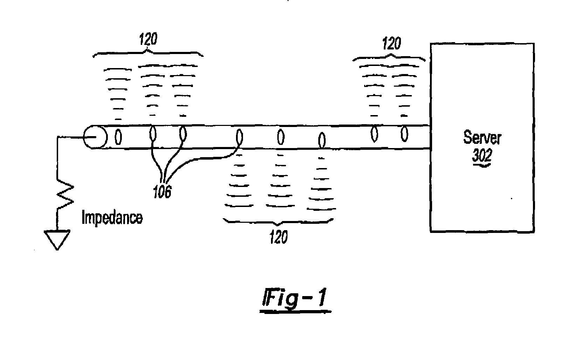

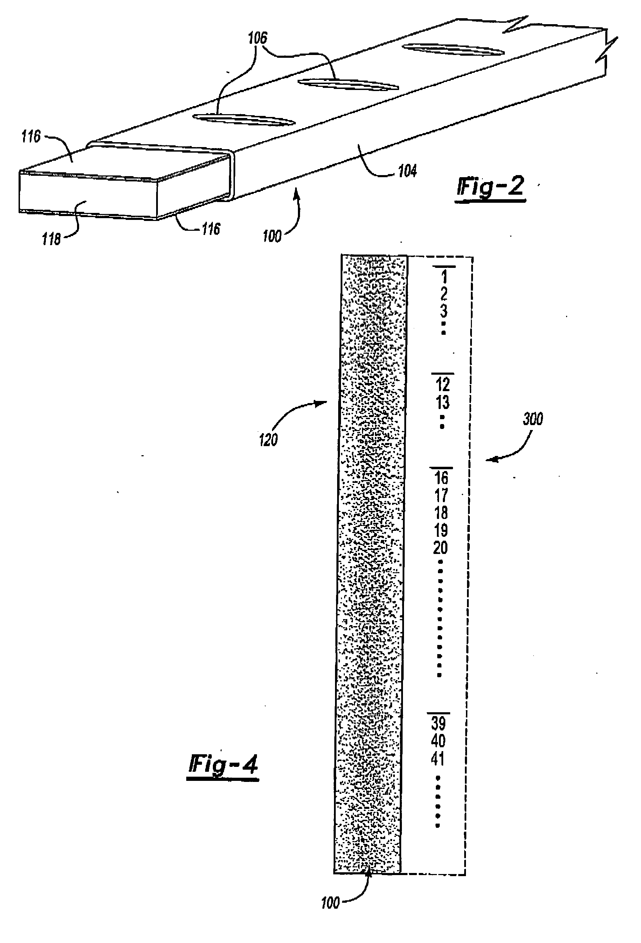

Figures 1 and 2 illustrate a distributed aperture antenna 100 structure for use in embodiments of the invention.

In the embodiment shown in figure 2, the antenna 100 is in the form of a parallel plate waveguide having two strips of conducting material 116 separated by a foam dielectric layer 118. The parallel plate waveguide structure is covered by an insulating shield 104 having a plurality of apertures 106 that allow energy to leak from the waveguide.

Apertures 106 are spaced so that the energy leakage from the conductor 116 forms a distributed group of low-power radiation points along the length of the antenna 100, providing uniform radiation patterns and field localization. More particularly, small amounts of radiation leak through the apertures 106 to form localized fields 120, allowing precise coupling to any receiver 122 in a given field 120. Rather than relying on a single field to couple the receivers 122 to the antenna 100, the antenna 100 couples with a given receiver 122 with the localized field 120 closest to the receiver 122. This ensures that the field 120 coupling the receiver 122 does not need to propagate a long distance before reaching the receiver 122, reducing any propagation-induced multi-path effects.

Reducing the distance between the receiver 122 and the specific field 120 coupling the receiver also allows reduction in the coupling energy used to link the antenna 100 and receiver 120. Thus, rather than relying on a single high-power field to couple the receiver 120, the invention generates a plurality of low-power fields, reducing the demand for input power and power amplifier requirements within the communication system. Reducing the size and strength of the fields 120 also minimizes the likelihood that any of the fields 120 will extend beyond a desired perimeter (e. g., outside an aircraft cabin) and undesirably interfere with other communication systems. One example of the field distribution of the distributed aperture antenna is shown in Figure 4.

The specific dimensions and geometry of the apertures, the spacing and location of the apertures, and the materials and design of the antenna itself can be varied depending on the desired final performance characteristics of the antenna 100. For example, applications where the antenna length can be kept shorter allow a smaller cross-section conductor 116 to be used, while applications requiring a longer antenna 100, and therefore a higher drive requirement, may need a larger cross-section conductor 116. Other possible antenna dimensions, antenna component dimensions and spacings, operating frequencies, and aperture locations and characteristics will be apparent to those of ordinary skill in the art.

In one embodiment, the apertures 106 are evenly spaced along the length of the antenna 100 to provide the greatest amount of control over propagation characteristics as well as a uniform gain distribution, If the antenna 100 is used in an enclosed space, such as an aircraft cabin, the localized fields 120 created by uniformly spaced apertures 106 will reduce or eliminate any areas where the field concentration is significantly higher than in other areas.

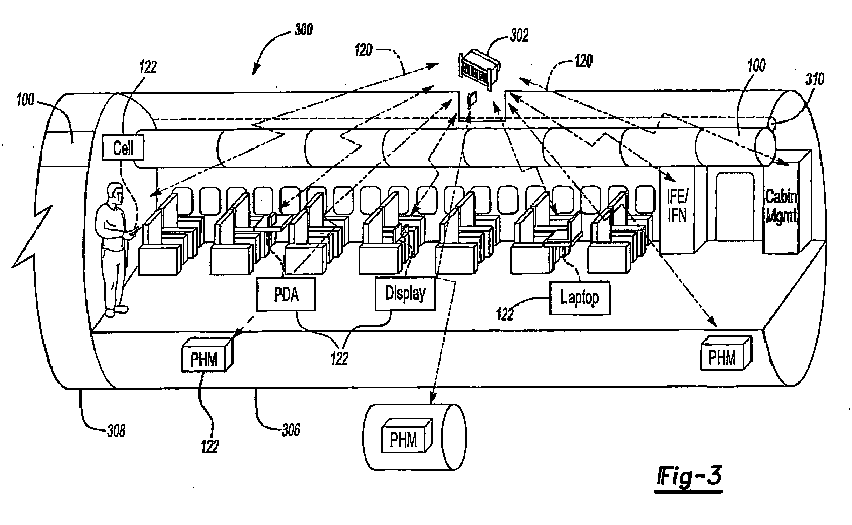

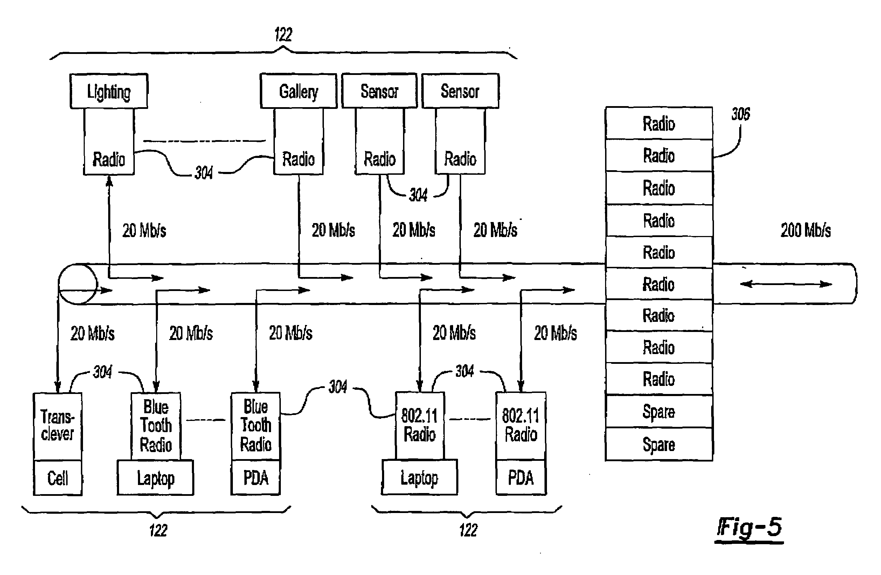

Figures 3 through 5 illustrate one embodiment where the distributed aperture antenna 100 is installed in an aircraft 300 in accordance with the invention. The antenna 100 is used as a broadband antenna to provide localized electric fields 120 within the cabin as well as in other areas of the aircraft. In this embodiment, the antenna 100 is connected to a base station, such as a wireless server 302. Radios 304 act as the interface between the receivers 122 and the antenna 100. The radios 304 themselves can be any known communication interface according to any known standard (e. g., Bluetooth, 802.11, Ethernet, USB, direct wireless, etc. ) to provide the maximum number of connection options for communication system users. As shown in Figures 3 and 5, the radios 304 can be associated with devices directed to aircraft devices(e. g. , sensors, lighting, etc. ) as well as with devices brought on-board the aircraft by passengers (e. g. , phones, computers, PDAs, etc.).

As shown in Figure 4, the electric fields 120 are evenly distributed along the aircraft 300 and, when viewed as a whole, act like a single electric field with a consistent field strength throughout. Unlike conventional antenna configurations, the inventive distributed aperture antenna 100 is able to keep the electric field 120 strength relatively low such that the field does not extend beyond the boundaries of the aircraft 300 while still maintaining sufficient strength for coupling with devices within the aircraft 300.

Referring to Figure 3, the distributed aperture antenna 100 may be installed within the ceiling and/or the floor of the aircraft and may be installed alongside other wiring bundles in existing wiring harness channels (not shown) in the aircraft 300. In one embodiment, the antenna 100 may be located in both pressurized and unpressurized compartments 306, 308 of the aircraft 300 so that equipment in both compartments can communicate via a single antenna. The cable structure of the inventive distributed aperture antenna 100 allows a high-speed communication system to be incorporated into the aircraft without adding undue weight to the aircraft or requiring complex installations, as is the case with conventional antennas.

In addition to providing passengers with networking capabilities, the same antenna 100 may be used to provide wireless links to carry data for non-flight critical aircraft functions, such as in-flight entertainment, cabin control systems, health monitoring and prognostic systems, aircraft security systems, etc. In one embodiment, non-flight critical data is carried through the aircraft via the antenna 100 while flight critical data is carried on wires 310. Because wires are no longer needed to carry the non-flight critical data, the invention allows the number of signal wires to be reduced, thereby reducing the size and weight of the aircraft wire harness required to support the wires. In one embodiment, any remaining signal wires connect wired devices to their corresponding controller in any conventional manner.

Wire reduction in the aircraft 300 may be conducted in two ways. First, the inventive distributed aperture antenna 100 may be installed into an existing aircraft to incorporate additional functions or systems that would ordinarily require new wires under a conventional approach. For example, if a security system were to be installed (i. e. , retrofitted) into an aircraft, a conventional approach would require wires to carry security data (e. g., images) to, for example, the cockpit. By incorporating the inventive antenna 100 into the aircraft 300, the security system can transmit data wirelessly.

Second, the inventive distributed aperture antenna 100 may be installed into new aircraft, allowing more systems and functions to be incorporated into an aircraft without having to eliminate any pre-existing wired systems. For new aircraft, a wireless system can be part of the original design, allowing the aircraft systems and functions to be designed around, for example, a wireless server in the first instance.

As a result, the inventive distributed aperture antenna provides a broadband communications path that can be used in a wireless network, providing a high-speed data link to aircraft passengers as well as offering a wireless signal path for non- flight critical aircraft functions. When used in an aircraft cabin, the inventive antenna allows control over the energy emission pattern within the aircraft cabin and reduces migration of energy outside the cabin, thereby reducing the risk of crosstalk between aircraft and/or between aircraft and airport communication systems. Further, by creating multiple localized fields rather than relying on one centralized field, the invention ensures that any receiver 122 in the aircraft 300 will be close to one of the localized fields 122, reducing the effect of propagation modes and multi- path effects within the system.

It should be understood that various alternatives to the embodiments of the invention described herein may be employed in practicing the invention. It is intended that the following claims define the scope of the invention and that the apparatus within the scope of these claims and their equivalents be covered thereby.

## Claims

1. A multi-passenger conveyance (300) comprising an enclosed space and a wireless communication system that accommodates multiple users in said enclosed space (300), said wireless communication system **characterised by** comprising: a distributed aperture antenna (100), comprising a conductive core, and a shield (104) surrounding the conductive core, wherein the shield (104) has a plurality of apertures (106) that form a plurality of energy leakage paths, wherein the energy leakage paths generate a plurality of electric fields (120), wherein the distributed aperture antenna (100) is in the form of a parallel plate waveguide and wherein the conductive core comprises a first conductive strip (116), a second conductive strip (116), and a dielectric (118) between the first strip and the second strip (116); and a base station (302) in communication with the distributed aperture antenna (100).

2. The multi-passenger conveyance of claim 1, wherein said conveyance is an aircraft (300) having a wireless communication system as claimed in claim 1, and comprising: a pressurized compartment (306), said distributed aperture antenna (100) being disposed in the pressurized compartment (306).

3. The aircraft of claim 2, further comprising at least one receiver (122) that links with the distributed aperture antenna (100) via at least one of said plurality of electric fields (120).

4. The aircraft of claim 3, wherein said at least one receiver (122) comprises a plurality of receivers (122), each receiver (122) associated with an aircraft function.

5. The aircraft of any of claims 2, 3 or 4, further comprising an unpressurized compartment (308), wherein the distributed antenna (100) is disposed in both the unpressurized compartment (308) and the pressurized compartment (306).

6. The aircraft of any of claims 2 to 5, further comprising a plurality of signal wires (310) disposed alongside the distributed aperture antenna (100).

7. The aircraft of claim 6, wherein the plurality of signal wires (310) carry data corresponding to flight critical functions and the distributed aperture antenna (100) carries data corresponding to non-flight critical functions.

## Patentansprüche

1. Transportmittel (300) für mehrere Passagiere, das einen umschlossenen Raum und ein drahtloses Kommunikationssystem aufweist, das mehreren Nutzern in dem umschlossenen Raum (300) Rechnung trägt, wobei das drahtlose Kommunikationssystem **dadurch gekennzeichnet ist, dass** es Folgendes aufweist: eine verteilte Aperturantenne (100), die einen leitfähigen Kern und eine den leitfähigen Kern umgebende Abschirmung (104) aufweist, wobei die Abschirmung (104) eine Mehrzahl von Öffnungen (106) aufweist, die eine Mehrzahl von Energieaustrittswegen bilden, wobei die Energieaustrittswege eine Mehrzahl von elektrischen Feldern (120) generieren, wobei die verteilte Aperturantenne (100) in Form eines parallelen Platten-Wellenleiters vorliegt und wobei der leitfähige Kern einen ersten leitfähigen Streifen (116), einen zweiten leitfähigen Streifen (116) und ein Dielektrikum (118) zwischen dem ersten und dem zweiten Streifen (116) aufweist; sowie eine Basisstation (302), die mit der verteilten Aperturantenne (100) in Verbindung steht.

2. Transportmittel für mehrere Passagiere nach Anspruch 1,
wobei es sich bei dem Transportmittel um ein Flugzeug (300) handelt, das ein drahtloses Kommunikationssystem gemäß Anspruch 1 besitzt und Folgendes aufweist: einen unter Druck stehenden Raum (306), wobei die verteilte Aperturantenne (100) in dem unter Druck stehendem Raum (306) angeordnet ist.

3. Flugzeug nach Anspruch 2,
das weiterhin mindestens einen Empfänger (122) aufweist, der mit der verteilten Aperturantenne (100) über mindestens eines der Mehrzahl von elektrischen Feldern (120) in Verbindung tritt.

4. Flugzeug nach Anspruch 3,
wobei der mindestens eine Empfänger (122) eine Mehrzahl von Empfängern (122) aufweist, wobei jeder Empfänger (122) einer Flugzeugfunktion zugeordnet ist.

5. Flugzeug nach einem der Ansprüche 2, 3 oder 4,
weiterhin aufweisend einen nicht unter Druck stehenden Raum (308), wobei die verteilte Antenne (100) sowohl in dem nicht unter Druck stehenden Raum (308) als auch in dem unter Druck stehenden Raum (306) angeordnet ist.

6. Flugzeug nach einem der Ansprüche 2 bis 5,
weiterhin aufweisend eine Mehrzahl von Signaldrähten (310), die entlang der verteilten Aperturantenne (100) angeordnet sind.

7. Flugzeug nach Anspruch 6,
wobei die Mehrzahl von Signaldrähten (310) Daten befördert, die flugkritischen Funktionen entsprechen, und die verteilte Aperturantenne (100) Daten befördert, die nicht flugkritischen Funktionen entsprechen.

## Revendications

1. Moyen de transport multi-passager (300) comprenant un espace enfermé et un système de communication sans fil qui loge de multiples utilisateurs dans ledit espace enfermé (300), ledit système de communication sans fil étant **caractérisé en ce qu'**il comprend : une antenne à ouvertures réparties (100), comprenant un noyau conducteur, et un blindage (104) entourant le noyau conducteur, où le blindage (104) comporte une pluralité d'ouvertures (106) qui forme une pluralité de chemins de fuite d'énergie, où les chemins de fuite d'énergie génèrent une pluralité de champs électriques (120), où l'antenne à ouvertures réparties (100) est sous la forme d'un guide d'onde à plaques parallèles et où le noyau conducteur comprend une première bandelette conductrice (116), une deuxième bandelette conductrice (116), et un diélectrique (118) entre la première bandelette et la deuxième bandelette (116) ; et une station de base (302) en communication avec l'antenne à ouvertures réparties (100).

2. Moyen de transport multi-passager selon la revendication 1, dans lequel ledit moyen de transport est un aéronef (300) comportant un système de communication sans fil tel que revendiqué dans la revendication 1, et comprenant : un compartiment pressurisé (306), ladite antenne à ouvertures réparties (100) étant disposée dans le compartiment pressurisé (306).

3. Aéronef selon la revendication 2, comprenant en outre au moins un récepteur (122) qui se lie avec l'antenne à ouvertures réparties (100) via au moins l'un de ladite pluralité de champs électriques (120).

4. Aéronef selon la revendication 3, dans lequel ledit au moins un récepteur (122) comprend une pluralité de récepteurs (122), chaque récepteur (122) étant associé à une fonction de l'aéronef.

5. Aéronef selon l'une quelconque des revendications 2, 3 ou 4, comprenant en outre un compartiment non pressurisé (308), où l'antenne répartie (100) est disposée à la fois dans le compartiment non pressurisé (308) et le compartiment pressurisé (306).

6. Aéronef selon l'une quelconque des revendications 2 à 5, comprenant en outre une pluralité de fils de signal (310) disposés le long de l'antenne à ouvertures réparties (100).

7. Aéronef selon la revendication 6, dans lequel la pluralité de fils de signal (310) porte des données correspondant à des fonctions critiques de vol et l'antenne à ouvertures réparties (100) porte des données correspondant à des fonctions critiques de non-vol.
